(19) Europäisches Patentamt
European Patent Office
Office européen des brevets

(11) **EP 0 991 856 B1**

(12) **EUROPÄISCHE PATENTSCHRIFT**

| | |
|---|---|
| (45) Veröffentlichungstag und Bekanntmachung des Hinweises auf die Patenterteilung: **04.09.2002 Patentblatt 2002/36** | (51) Int Cl.⁷: **F02B 37/24** |
| (21) Anmeldenummer: **98930806.9** | (86) Internationale Anmeldenummer: **PCT/EP98/03612** |
| (22) Anmeldetag: **16.06.1998** | (87) Internationale Veröffentlichungsnummer: **WO 99/000590 (07.01.1999 Gazette 1999/01)** |

(54) **BRENNKRAFTMASCHINEN - TURBOLADER - SYSTEM**

TURBOCHARGER SYSTEM FOR INTERNAL COMBUSTION ENGINES

SYSTEME TURBOCOMPRESSEUR POUR MOTEURS A COMBUSTION INTERNE

(84) Benannte Vertragsstaaten:
**AT CH DE FR GB IT LI SE**

(30) Priorität: **26.06.1997 DE 19727140**

(43) Veröffentlichungstag der Anmeldung:
**12.04.2000 Patentblatt 2000/15**

(73) Patentinhaber: **DaimlerChrysler AG 70567 Stuttgart (DE)**

(72) Erfinder:
• **SCHMIDT, Erwin D-73666 Baltmannsweiler (DE)**
• **SUMSER, Siegfried D-70184 Stuttgart (DE)**

(56) Entgegenhaltungen:
**DE-C- 4 232 400    DE-C- 4 330 487**

• **PATENT ABSTRACTS OF JAPAN vol. 013, no. 100 (M-805), 9. März 1989 & JP 63 289220 A (ISUZU MOTORS LTD), 25. November 1988**
• **PATENT ABSTRACTS OF JAPAN vol. 013, no. 318 (M-852), 19. Juli 1989 & JP 01 104925 A (ISHIKAWAJIMA HARIMA HEAVY IND CO LTD), 21. April 1989**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Brennkraftmaschinen-Turbolader-System gemäß dem Oberbegriff des Anspruches 1.

Ein solches Brennkraftmaschinen-Turbolader-System ist beispielsweise aus der DE 4330487 C1 bekannt. In dem ringdüsenförmigen, vom Strömungskanal ausgehenden und auf das Turbinenrad ausmündenden Bereich ist dort ein Leitapparat angeordnet, der ein variables, mit verstellbaren Leitschaufeln versehenes Leitgitter umfaßt, das unterschiedlich große, freie Strömungsquerschnitte ermöglicht und über das im Bremsbetrieb als Drossel der jeweils engste Strömungsquerschnitt im Abgasweg zur Turbine bestimmbar und in Abhängigkeit von Betriebsparametern der Brennkraftmaschine einstellbar ist. Mit einem solchen System lassen sich hohe Bremsleistungen erzielen, Schwierigkeiten bereitet es aber, diese Bremsleistungen bei geringer thermischer Belastung der Brennkraftmaschine zu realisieren und ein jeweils geeignetes Brennkraftmaschinen-Turbolader-System zu bestimmen.

Diesem Ziel dient die Erfindung, durch die Brennkraftmaschinen-Turbolader-Systeme geschaffen werden sollen, die für den Bremsbetrieb hohe Bremsleistungen bei relativ niedrigen thermischen Belastungen der Brennkraftmaschine ermöglichen sollen.

Erreicht wird dies bei Brennkraftmaschinen-Turbolader-Systemen durch eine Ausgestaltung gemäß den Merkmalen des Anspruches 1, durch die die Turbine in ihren Hauptparametern in Bezug auf das Gesamt-Hubvolumen der Brennkraftmaschine derart festgelegt ist, daß maximale Bremsleistungen ermöglicht werden, und zwar bei vergleichsweise geringer thermischer Belastung der Brennkraftmaschine.

Hierbei gilt die Beziehung

$$TBF = A_T \times \frac{D_T}{V_H},$$

wobei mit $A_T$ der bei maximaler Bremsleistung gegebene freie Strömungsquerschnitt im Abgasweg der Turbine bezeichnet ist, mit $D_T$ der Eintrittsdurchmesser des Turbinenrades (bei Radialturbinen, der geometrische Eintrittsdurchmesser; bei Axialturbinen, der mittlere Strömungsdurchmesser der Auslegung) und mit $V_H$ das Hubvolumen der Brennkraftmaschine. TBF bildet einen Turbo-Brems-Faktor, der im Rahmen der Erfindung kleiner als 0,005 (5 ‰) ist und der bevorzugt bei 0,001 bis 0,003 (1-3 ‰) liegt.

Bezogen auf den Auslegungspunkt der maximalen Bremsleistung ist im Rahmen der Erfindung der bei maximaler Bremsleistung gegebene freie Strömungsquerschnitt im Abgasweg zur Turbine gebildet durch einen einen unteren Drehzahlbereich abdeckenden, als Restströmungsquerschnitt bei geschlossenem Leitgitter verbleibenden Querschnitt und einen variablen Strömungsquerschnittsanteil, der gegen den Auslegungspunkt maximaler Bremsleistung größer wird, wobei das Verhältnis des zusätzlichen, variabel gegen die maximale Bremsleistung anwachsenden Strömungsquerschnittes zu dem bei geschlossenem Leitgitter verbleibenden Restströmungsquerschnitt für den Auslegungspunkt maximaler Bremsleistung größer 0,2 ist, und bevorzugt im Bereich zwischen 0,2 und 1 liegt. Bei kleiner Verhältniszahl ist die Bremsleistung im unteren Drehzahlbereich verhältnismäßig klein und wächst im oberen Drehzahlbereich verhältnismäßig steil an, bei großer Verhältniszahl ergibt sich eine höhere Bremsleistung im unteren Drehzahlbereich mit einem, im Vergleich zur kleineren Verhältniszahl, flacheren Anstieg der Bremsleistung gegen den Punkt maximaler Bremsleistung als Auslegungspunkt. Bezogen auf das Drehzahlband des Motores beginnt der obere Drehzahlbereich, in dem ein zusätzlicher variabler Strömungsquerschnitt freigegeben ist, bei etwa 2/3 bis 3/4 der bei maximaler Bremsleistung gegebenen Drehzahl, wobei die Drehzahl, die bei maximaler Bremsleistung gegeben ist, in einem Bereich liegt, der um etwa 1/4 bis 1/3 größer als die Nenndrehzahl der Brennkraftmaschine ist, also die Drehzahl bei maximaler Leistung der Brennkraftmaschine.

Weitere Einzelheiten und Merkmale der Erfindung ergeben sich aus den Ansprüchen. Ferner wird die Erfindung nachfolgend anhand von Zeichnungen noch näher erläutert,

wobei

Figur 1 einen Schnitt durch die Turbinenseite eines Turboladers zeigt,

Figur 2 eine Schnittdarstellung gemäß Linie II-II in Figur 1, die insbesondere den mit verstellbaren Leitschaufeln versehenen Leitapparat der Turbine zeigt,

Figur 3 eine im wesentlichen der Figur 1 entsprechende Schnittdarstellung durch einen Turbolader mit der Turbine zugeordnetem, zweiteiligem Leitapparat, und

Figur 4 eine schematisierte Prinzipdarstellung zeigen, bei der der grundsätzliche Verlauf der Bremsleistung über der Motordrehzahl bei unterschiedlichen Verhältnissen von variablem, bei maximaler Bremsleistung zusätzlich freigegebenem Strömungsquerschnitt zu bei geschlossenem Leitgitter gegebenem Rest-Strömungsquerschnitt dargestellt ist.

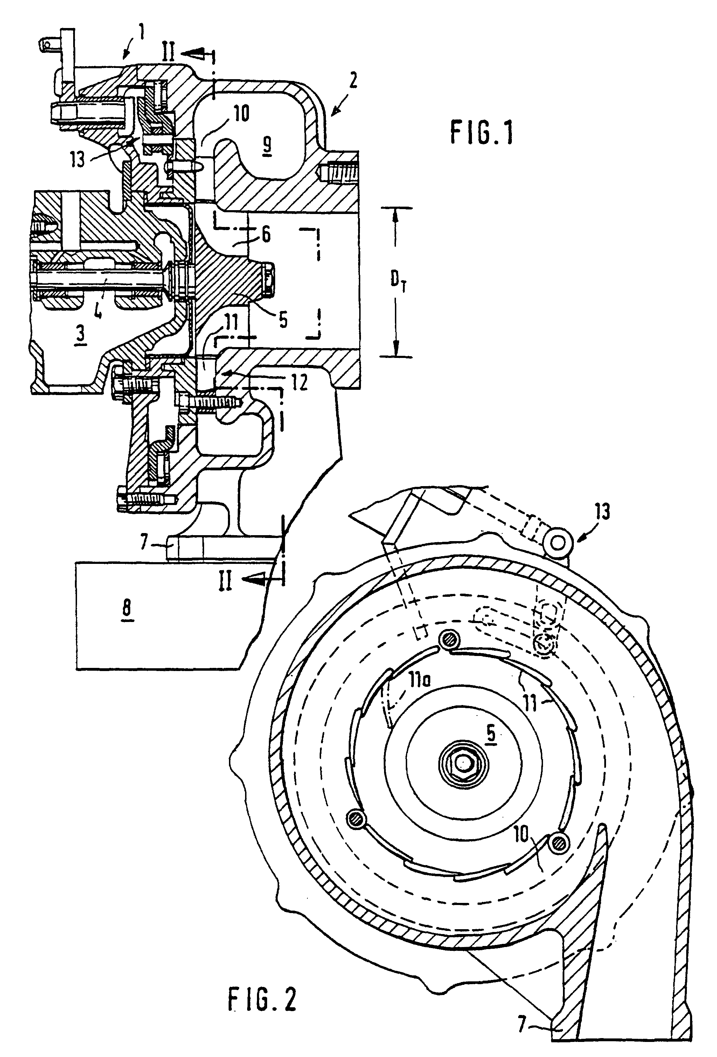

In der schematischen Darstellung gemäß Figuren 1 und 2 ist mit 1 der Turbolader insgesamt bezeichnet, von dem aber nur die Turbine 2 und teilweise die in der Verbindung der Turbine 2 zum nicht dargestellten Verdichterteil liegende Antriebsverbindung 3 gezeigt sind. Auf der Verbindungswelle 4 sitzt das Turbinenrad 5 mit seinen Turbinenschaufeln 6, die radial mit Abgas beaufschlagt werden.

Über den Flansch 7 ist die Turbine mit der hier nur schematisch angedeuteten Brennkraftmaschine 8 verbunden, von der das Abgas dem Strömungskanal 9 der Turbine zugeleitet wird, aus dem es über eine radial verlaufende Ringdüse 10 auf die Turbinenradschaufeln 6 ausströmt. In dem Düsenkanal der Ringdüse 10 liegen, wie in Verbindung mit Figur 2 zeigt, die verstellbaren Leitschaufeln 11 eines Leitapparates 12, wobei die Verstellmechanik für die Schaufeln 11 in Figur 1 bei 13 angedeutet ist, hier aber nicht weiter erläutert wird. Über die Verstellmechanik 13 können die Leitschaufeln 11, wie aus Figur 2 ersichtlich, aus einer geschlossenen Lage, in der sie in Umfangsrichtung aufeinander folgend mit Überdeckung zueinander liegen und den Querschnitt der Ringdüse 10 im wesentlichen abdecken, in eine geöffnete Stellung verschwenkt werden, wie dies für die Schaufel 11a angedeutet ist, in der sie nahezu tangential zu dem die Turbinenschaufeln 6 umschließenden Kreis liegen.

Befinden sich die Leitschaufeln 11 in ihrer in Figur 2 gezeigten, geschlossenen Lage, so ist der Querschnitt der Ringdüse 11 bis auf bestehende Spalte nahezu geschlossen, so daß der im Übergang vom Strömungskanal 9 auf die Turbine 2 im Bereich der Ringdüse 10 verbleibende Rest-Strömungsquerschnitt sehr klein ist.

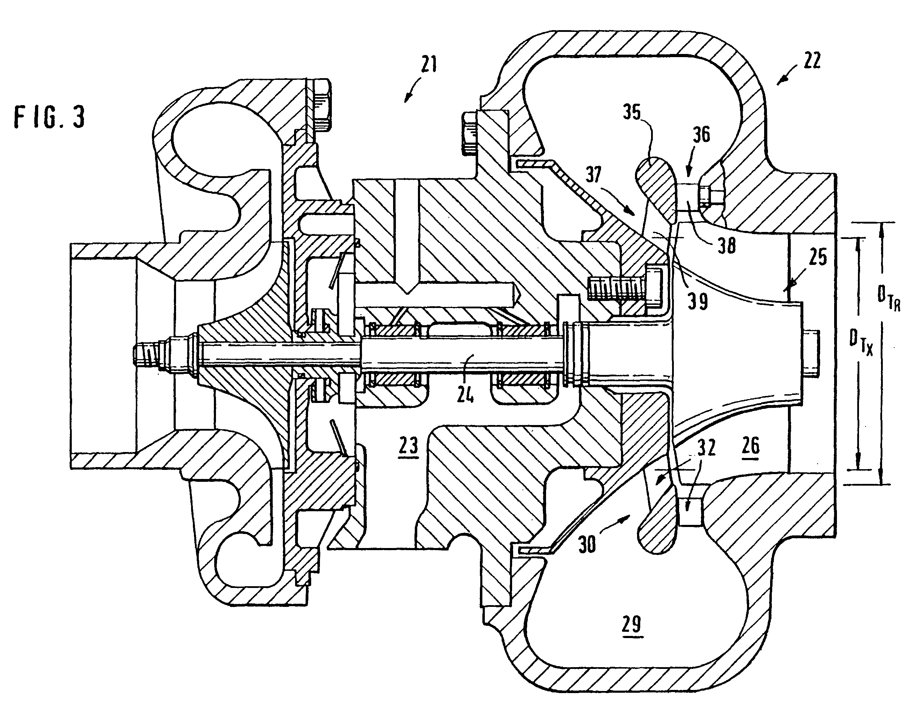

Figur 3 zeigt eine weitere Ausführungsform eines Turboladers, wobei dieser insgesamt mit 21 bezeichnet ist und eine Turbine 22 umfaßt, zwischen der und einem gegenüberliegenden Verdichterteil eine Antriebsverbindung 23 liegt, die eine Welle 24 umfaßt, auf der das Turbinenrad 25 gleichachsig zu dem gegenüberliegenden Verdichterrad angeordnet ist. Wie schon anhand der Figuren 1 und 2 erläutert und hier nicht weiter gezeigt ist der Turbolader 21 mit einer Brennkraftmaschine verbunden und wird mit deren Abgasen beaufschlagt, die über hier nicht weiter dargestellte Strömungswege von der Brennkraftmaschine dem Strömungskanal 29 zugeführt werden, der über einen ringdüsenförmigen Bereich 30 mit dem Aufnahmeraum für das Turbinenrad 25 verbunden ist, dessen Turbinenradschaufeln mit 26 bezeichnet sind. Die insgesamt mit 30 bezeichnete Ringdüse, die bei dem Turbolader gemäß Figur 3 über einen Ringkörper 35 in einen radialen Kanalteil 36 und einen halbaxialen Kanalteil 37 unterteilt ist, nimmt in den beiden Kanalteilen einen Leitapparat 32 auf, der im Kanalteil 36 ein Leitgitter 38 mit verstellbaren Leitschaufeln und im Kanalteil 37 ein Leitgitter 39 mit feststehenden Leitschaufeln umfaßt.

Das Leitgitter 39 ist in seinem Strömungsquerschnitt unveränderlich, das Leitgitter 38 in Abhängigkeit von der Stellung der zugehörigen, hier nicht weiter dargestellten Leitschaufeln im Strömungsquerschnitt veränderlich. Die Leitschaufeln des Leitgitters 38 sind in bekannter Weise angeordnet und verstellbar, beispielsweise analog zur Darstellung in Figur 2.

Entsprechend der unterschiedlichen Gestaltung des Leitapparates 12 bzw. 32 in Figuren 1 und 2 bzw. in Figur 3 ergeben sich unterschiedliche Eintrittsdurchmesser für das Abgas im Übergang vom Leitapparat 12 bzw. 32 auf das Turbinenrad 5 bzw. 25. Der entsprechende Eintrittsdurchmesser entspricht beim Ausführungsbeispiel gemäß Figuren 1 und 2 praktisch dem Umkreis der Turbinenradschaufeln 6 des Turbinenrades 5 und ist mit $D_T$ bezeichnet.

Beim Ausführungsbeispiel gemäß Figur 3 ist die Ringdüse 30 geteilt und umfaßt einen radialen Kanalteil 36 und einen halbaxialen Kanalteil 37, die auf unterschiedlichem Durchmesser auf die Schaufeln 26 des Turbinenrades ausmünden. Hierbei entspricht der Eintrittsdurchmesser bezüglich des radialen Kanalteils wiederum etwa dem Umkreis der Turbinenradschaufeln 26 in dem diesem Kanalteil 36 gegenüberliegenden Bereich und ist mit $D_{T_R}$ bezeichnet. Der Eintrittsdurchmesser des halbaxialen Kanalteiles 37 ist kleiner, da dieser Kanalteil sich mit den Turbinenradschaufeln 26 auf einem Ringquerschnitt überdeckt, der radial innerhalb des Umkreises liegt. Der mittlere Ringdurchmesser dieses Ringquerschnittes ist im wesentlichen als der Eintrittsdurchmesser für diesen halbaxialen Kanalteil 37 anzusehen und in der Darstellung gemäß Figur 3 mit $D_{T_x}$ bezeichnet. Der Strömungsquerschnitt, der bei maximaler Bremsleistung freigegeben ist, ist mit $A_T$ bezeichnet. Er besteht aus einem Restströmungsquerschnitt, der bei geschlossenen Leitschaufeln des Leitgitters 38 verbleibt, und entspricht für dieses Leitgitter 38 etwa den verbleibenden Spaltquerschnitten. Bei maximaler Bremsleistung ist zusätzlich zu dem in seinem Strömungsquerschnitt unveränderlichen, also in allen Betriebsphasen offenen Leitgitter 39 durch öffnen der Leitschaufeln des Leitgitters 38 ein variabler Strömungsquerschnitt zugeschaltet.

Bei ungeteilter Ringdüse 10 (Figur 1 und 2) wirkt die über den Querschnitt $A_T$ zuströmende Gasmenge insgesamt auf einem dem Eintrittsdurchmesser $D_T$ des Turbinenrades entsprechenden Durchmesser auf das Turbinenrad.

Beim Ausführungsbeispiel gemäß Figur 3 ergeben sich entsprechende, freie Strömungsquerschnittsanteile im Abgasweg zur Turbine sowohl für den radialen Kanalteil 36 wie auch für den halbaxialen Kanalteil 37. Letzterer ist dabei unveränderlich, da das Leitgitter 39 dieses Kanalteiles mit feststehenden Leitschaufeln versehen ist. Der Strömungsquerschnitt des radialen Kanalteiles ist veränderlich, da das dort vorgesehene Leitgitter 38 mit verstellbaren Leitschaufeln versehen ist. Sind diese Leitschaufeln geschlossen, so ist analog zur Darstellung gemäß Figuren 1 und 2 der für diese Leitgitter 38 verbleibende freie Restströmungsquerschnitt praktisch durch die Spaltmaße bestimmt.

Entsprechend den unterschiedlichen freien Strömungsquerschnitten ergeben sich unterschiedliche durchströmende Gasmengen, wobei sich diese analog zu den Querschnitten verhalten.

Wird, wie bereits angegeben, der bei maximaler Bremsleistung gegebene freie Strömungsquerschnitt im Abgasweg zur Turbine mit $A_T$ bezeichnet, so setzt sich dieser bei einer zweiteiligen Ringdüse 30 mit einem radialen Kanalteil 36 und einem halbaxialen Kanalteil 37 aus einem radialen Querschnittsanteil $A_{T_R}$ und einem halbaxialen Querschnittsanteil $A_{T_X}$ wie folgt zusammen:

$$A_T = A_{T_X} + A_{T_R}.$$

Ein die unterschiedlichen durchströmenden Mengen in den Kanalteilen 36 und 37 gewichtend berücksichtigender Eintrittsdurchmesser des Turbinenrades $D_T$ errechnet sich wie folgt:

$$D_T = \frac{A_{T_X}}{A_T} \times D_{T_X} + \frac{A_{T_R}}{A_T} \times D_{T_R}$$

In Berücksichtigung vorstehender Festlegungen gilt für ein Brennkraftmaschinen-Turbolader-System, bei dem für den Bremsbetrieb hohe Bremsleistungen mit relativ geringen thermischen Belastungen verbunden sind, die Formel

$$TBF = A_T \times \frac{D_T}{V_H},$$

wobei der Turbo-Brems-Faktor TBF kleiner 0,005 ist, bevorzugt zwischen 0,001 und 0,003, insbesondere bei 0,002 liegt und $V_H$ das Hubvolumen der Brennkraftmaschine bezeichnet.

Bezogen auf eine Turbine mit einem Leitgitter mit verstellbaren Leitschaufeln, bei der bei maximaler Bremsleistung über den Reststörmungsquerschnitt hinaus durch (teilweises) Öffnen der Leitschaufeln ein zusätzlicher variabler Querschnittsanteil freigegeben wird, gilt für den bei maximaler Bremsleistung gegebenen freien Querschnitt im Abgasweg zur Turbine:

$$A_T = A_D + dA_{V,max},$$

wobei $A_D$ der bei geschlossenem Leitgitter verbleibende Rest-Strömungsquerschnitt und $dA_{V,max}$ der zusätzlich durch das Leitgitter bei maximaler Bremsleistung freigegebene Strömungsquerschnitt ist.

Das Verhältnis VF von $dA_{V,max}$ zu $A_D$ ist bevorzugt größer 0,2, und es liegt insbesondere im Bereich zwischen 0,2 und 1, wobei diese mit VF bezeichnete Verhältniszahl um so größer gewählt wird, je höher die Bremsleistung schon bei niedrigen Motordrehzahlen sein soll.

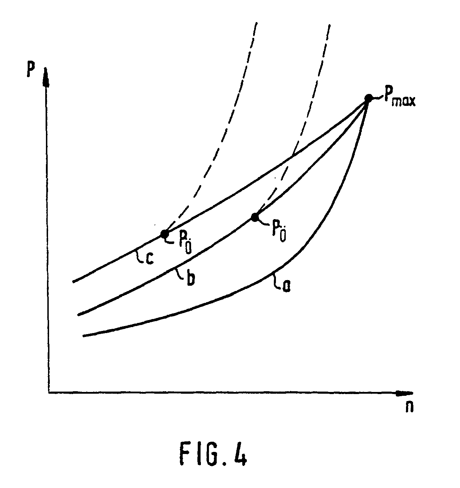

Figur 4 veranschaulicht dies in einem schematisierten Diagramm, in dem die Bremsleistung P über der Motordrehzahl n aufgetragen ist und wobei die Kurve a die Verhältnisse in Bezug auf ein Brennkraftmaschinen-Turbolader-System beschreibt, bei dem das Leitgitter über den gesamten Drehzahlbereich konstanten Querschnitt aufweist, die Verhältniszahl der $A_{V,max}$ zu $A_D$ also 0 ist. Der Kurvenzug b schneidet sich mit dem Kurvenzug a im Auslegungspunkt $P_{max}$ auf maximale Bremsleistung, liegt aber über dem Kurvenzug a und veranschaulicht eine Maschinenauslegung, bei der im niedrigen Motordrehzahlbereich schon eine höhere Bremsleistung gegeben ist, und die somit, bezogen auf eine analoge Maschinenkonfiguration und gleiche Abgasmengen im unteren Drehzahlbereich einen kleineren Strömungsquerschnitt im Abgasweg zur Turbine aufweisen muß. Dieser Düsenauslegung mit kleinerem Strömungsquerschnitt im unteren Motordrehzahlbereich entspricht eine variable Vergrößerung des freien Strömungsquerschnittes im oberen Drehzahlbereich, da ansonsten die maximale Bremsleistung bei einem niedrigen Motordrehzahlniveau erreicht werden würde. Der Beginn der Öffnung der Leitschaufeln ist bei $P_Ö$ angedeutet; ohne Zuschalten des variablen Querschnittsanteiles ergäbe sich, von $P_Ö$ ausgehend, der strichlierte Kurvenverlauf.

Der Kurvenzug c stellt eine weitere Variante mit noch höherer Bremsleistung im unteren Drehzahlbereich dar, und gleiche Grundauslegung der Maschine unterstellt muß der variable Anteil des Strömungsquerschnittes im oberen Drehzahlbereich größer sein als im Falle b, wenn die maximale Bremsleistung $P_{max}$ bei der gleichen Motordrehzahl erreicht werden soll. Auch hier ist, analog zum Kurvenzug b, der Zuschaltpunkt für den variablen Anteil mit $P_Ö$ bezeichnet.

Die Zuschaltung des variablen Strömungsquerschnittes erfolgt also mit zunehmendem variablen Anteil am Gesamtöffnungsquerschnitt bzw. höher liegender Bremsleistung im unteren Drehzahlbereich bevorzugt jeweils bei niedrigeren Drehzahlen, um eine gleichmäßige Steigerung der Bremsleistung über der Motordrehzahl zu gewährleisten.

in Bezug auf das Brennkraftmaschinen-Turbolader-System wird die maximale Bremsleistung zweckmäßigerweise in einem Motordrehzahlbereich erreicht, der oberhalb des Bereiches der Nenndrehzahl des Motores, also der Drehzahl des Motores bei maximaler Leistung liegt. Liegt die Nenndrehzahl bei 1800 Umdrehungen, so kann die Motordrehzahl bei maximaler Bremsleistung beispielsweise im Bereich von 2300 Umdrehungen pro Minute liegen. Der obere Drehzahlbereich, in dem ein zusätzlicher, variabler Strömungsquerschnitt freigegeben ist, beginnt zweckmäßigerweise etwa bei 2/3 bis 3/4 der bei maximaler Bremsleistung gegebenen Drehzahl, wobei die Größe des variablen Querschnittsanteils bevorzugt kontinuierlich drehzahlabhängig bis zum Erreichen der maximalen Bremsleistung anwächst, die den Bezugspunkt für die vorstehend erläuterte Auslegung des Systemes auf maximale Bremsleistung bei möglichst geringer thermischer Belastung bildet.

Als Leitapparat mit variablem Leitgitter wurden vorstehend Leitgitterausführungen erläutert, bei denen die Leitschaufeln innerhalb des Leitgitters verstellbar sind, das Leitgitter insgesamt aber seine Lage beibehält.

Bekannt sind auch Leitgitter, bei denen die Leitschaufeln innerhalb des Leitgitters nicht verstellbar sind, aber das Leitgitter als ganzes, so daß gegeneinander versetzten Bereichen des Leitgitters zugeordnete, unterschiedlich angeordnete und/oder ausgebildete Leitschaufeln durch Verstellen des Leitgitters (beispielsweise durch axiales Verstellen des Leitgitters entsprechend der DE 42 32 400 C1) im Bremsbetrieb in Einsatz gebracht werden können, und somit für den Bremsbetrieb im Sinne der Erfindung den unterschiedlich angeordneten und/oder ausgebildeten Leitschaufeln entsprechende, unterschiedliche freie Strömungsquerschnitte durch Verstellen des Leitgitters als solchem realisiert werden können.

Die Erfindung ist insbesondere für in Nutzfahrzeugen eingesetzte Brennkraftmaschinen-Turbolader-Systeme von Interesse, also Fahrzeuge, die auch für den Bremsbetrieb auf hohe Motorbremsleistungen angewiesen sind und die mit verhältnismäßig großvolumigen Motoren ausgerüstet sind.

Der Erfindung kann aber auch in Verbindung mit kleinvolumigen Motoren und leichten Fahrzeugen, so z.B. Personenkraftwagen Bedeutung zukommen, wenn die dort verwendeten Motoren an sich nur geringe Bremsleistungen, beispielsweise aufgrund der dort verwendeten Gaswechselsteuersysteme aufbringen können.

Ergänzend zum bezogen auf den Bremsbetrieb verstellbaren Leitgitter kann es in Ausgestaltung der Erfindung zweckmäßig sein, ein Abblaseventil - wie an sich bekannt - vorzusehen, sei es zum Zwecke der Druckbegrenzung als Notventil, sei es als ergänzend zum verstellbaren Leitgitter ebenfalls in seinem Öffnungsquerschnitt veränderliches Drosselelement, das beispielsweise im gegen den Punkt maximaler Bremsleistung oberen Drehzahlbereich bevorzugt allmählich geöffnet wird, falls es beispielsweise Schwierigkeiten bereitet, den erforderlichen variablen Querschnittsanteil allein und/oder im geforderten Zeitintervall durch die Verstellung des Leitapparates zu realisieren.

**Patentansprüche**

1. Brennkraftmaschinen-Turbolader-System, bei dem die Brennkraftmaschine mit zumindest einem volumenveränderlichen Brennraum und mit durch die Summe der Differenzvolumina zwischen kleinstem und größtem Volumen der Brennräume einer Brennkraftmaschine bestimmten Brennkraftmaschinen-Hubvolumen versehen ist und bei dem das der Brennkraftmaschine zugeordnete Turboladersystem zumindest eine im Abgasweg der Brennkraftmaschine angeordnete Turbine mit einem Strömungskanal aufweist, der über einen ringdüsenförmigen Bereich auf ein Turbinenrad ausmündet, wobei im Mündungsbereich ein Leitapparat angeordnet ist, der ein variables, mit verstellbaren Leitschaufeln versehenes Leitgitter umfaßt, das unterschiedlich große freie Strömungsquerschnitte ermöglicht und über das als Drossel im Bremsbetrieb der jeweils engste Strömungsquerschnitt im Abgasweg zur Turbine bestimmbar und in Abhängigkeit vom Betriebsparametern der Brennkraftmaschine einstellbar ist,

**dadurch gekennzeichnet,**

**daß** - bezogen auf den Bremsbetrieb bei maximaler Bremsleistung der Brennkraftmaschine -

- der bei maximaler Bremsleistung gegebene freie Strömungsquerschnitt $A_T$ im Abgasweg zur Turbine
- der Eintrittsdurchmesser $D_T$ des Turbinenrades
- das Hubvolumen $V_H$ der Brennkraftmaschine in folgender Beziehung zu einander stehen:

$$TBF = A_T \times \frac{D_T}{V_H},$$

wobei TBF als Turbo-Brems-Faktor kleiner als 0,005 (5 ‰) ist.

2. Brennkraftmaschinen-Turbolader-System nach Anspruch 1,
**dadurch gekennzeichnet,**
**daß** der Turbo-Brems-Faktor TBF zwischen 0,001 und 0,003 (1-3 ‰) liegt.

3. Brennkraftmaschinen-Turbolader-System nach Anspruch 2,
**dadurch gekennzeichnet,**
**daß** der Turbo-Brems-Faktor TBF bei 0,002 (2 ‰) liegt.

4. Brennkraftmaschinen-Turbolader-System nach einem der Ansprüche 1 bis 3,
**dadurch gekennzeichnet,**
**daß** bei einem Leitgitter mit verstellbaren Leitschaufeln für den bei maximaler Bremsleistung gegebenen freien Strömungsquerschnitt $A_T$ im Abgasweg zur Turbine gilt:

$$A_T = A_D + dA_{V,max},$$

wobei

$A_D$ der bei geschlossenem Leitgitter verbleibende Rest-Strömungsquerschnitt und

$dA_{V \cdot max}$ ein zusätzlich durch das Leitgitter bei maximaler Bremsleistung freigegebener Strömungsquerschnitt ist.

**5.** Brennkraftmaschinen-Turbolader-System nach Anspruch 4,
**dadurch gekennzeichnet,**
**daß** für das Verhältnis VF des bei geschlossenem Leitgitter verbleibenden Rest-Strömungsquerschnittes $A_D$ zu dem zusätzlichen, bei maximaler Bremsleistung freigegebenen Strömungsquerschnitt $dA_{V,max}$ des Leitgitters gilt:

$$VF = \frac{dA_{V,max}}{A_D} > 0{,}2.$$

**6.** Brennkraftmaschinen-Turbolader-System nach Anspruch 5,
**dadurch gekennzeichnet,**
**daß** der zusätzlich bei maximaler Bremsleistung freigegebene Strömungsquerschnitt $dA_{V,max}$ des Leitgitters der obere Grenzwert ist, den der variable Strömungsquerschnitt $dA_V$ innerhalb seines Verstellbereichs annehmen kann.

**7.** Brennkraftmaschinen-Turbolader-System nach Anspruch 6,
**dadurch gekennzeichnet,**
**daß** der variable Strömungsquerschnitt $dA_V$ drehzahlabhängig veränderlich ist.

**8.** Brennkraftmaschinen-Turbolader-System nach Anspruch 7,
**dadurch gekennzeichnet,**
**daß** der variable Strömungsquerschnitt $dA_V$ mit abnehmender Drehzahl kleiner wird.

**9.** Brennkraftmaschinen-Turbolader-System nach einem der Ansprüche 6 bis 8,
**dadurch gekennzeichnet,**
**daß** der Verstellbereich des variablen Strömungsquerschnitts $dA_V$ dem oberen Bereich eines Drehzahlbandes zugeordnet ist, das bis zu der der maximalen Bremsleistung entsprechenden Drehzahl reicht.

**10.** Brennkraftmaschinen-Turbolader-System nach Anspruch 9,
**dadurch gekennzeichnet,**
**daß** die maximale Bremsleistung bei einer Drehzahl gegeben ist, die über der Nenndrehzahl der Brennkraftmaschine liegt.

**11.** Brennkraftmaschinen-Turbolader-System nach Anspruch 9 oder 10,
**dadurch gekennzeichnet,**
**daß** der obere Drehzahlbereich, in dem der zusätzliche, variable Strömungsquerschnitt $dA_V$ freigegeben ist, bei etwa 2/3 bis 3/4 der bei maximaler Bremsleistung gegebenen Drehzahl beginnt.

**12.** Brennkraftmaschinen-Turbolader-System nach einem der vorhergehenden Ansprüche,
**dadurch gekennzeichnet,**
**daß** die maximale Bremsleistung bei einer Drehzahl gegeben ist, die etwa 1/4 bis 1/3 größer ist als die bei Nennleistung der Brennkraftmaschine gegebene Nenndrehzahl.

**Claims**

**1.** Internal combustion engine turbo-charger system, in which the internal combustion engine is provided with at least one variable-volume combustion chamber and with an internal combustion engine cubic capacity defined by the sum of the capacity differential between smallest and largest volumes of the combustion chambers of an internal combustion engine, and in which the turbo-charger system co-operating with the internal combustion engine has at least one turbine with a flow passage disposed in the path of the exhaust gas of the internal combustion engine, which opens via an annular nozzle-shaped region onto a turbine impeller, a baffle system being disposed in the opening region which has a variable blade arrangement with moving blades to enable free flow cross-sections of varying sizes to be obtained and by means of which the respective narrowest flow cross-section on the exhaust gas path to the turbine can be defined in the manner of a throttle during brake operation and which is adjustable depending on operating parameters of the internal combustion engine,
**characterised in that**

- by reference to brake operation at the maximum braking power of the internal combustion engine -

  • the free flow cross-section $A_T$ in the exhaust gas path to the turbine
  • the inlet diameter $D_T$ of the turbine impeller
  • the cubic capacity $V_H$ of the internal combustion engine are correlated to one another by the following equation:

$$TBF = A_T \times \frac{D_T}{V_H}$$

  in which TBF is the turbo-brake-factor and is less than 0.005 (5‰).

**2.** Internal combustion engine-turbo-charger system as claimed in claim 1,
**characterised in that**
the turbo-brake-factor TBF is between 0.001 and 0.003 (1-3‰).

**3.** Internal combustion-turbo-charger system as claimed in claim 2,
**characterised in that**
the turbo-brake-factor TBF is 0.002 (2‰).

**4.** Internal combustion-engine-turbo-charger system as claimed in one of claims 1 to 3,
**characterised in that**
the following equation applies in the case of a blade arrangement with moving blades for a given free flow cross-section $A_T$ on the exhaust gas path to the turbine at maximum braking power:

$$A_T = A_D + AdA_{V,max},$$

in which
$A_D$ is the residual flow cross-section when the blade arrangement is closed and
$dA_{V,max}$ is an additional flow cross-section of the blade arrangement released at maximum braking power.

**5.** Internal combustion engine-turbo-charger system as claimed in claim 4,
**characterised in that**
the ratio VF of the residual flow cross-section $A_D$ when the blade arrangement is closed to the additional flow-cross section $dA_{V,max}$ of the blade arrangement released at maximum braking power is expressed as:

$$V_F = \frac{dA_{V,max}}{A_D} > 0.2.$$

**6.** Internal combustion engine-turbo-charger system as claimed in claim 5,
**characterised in that**
the additional flow cross-section $dA_{V,max}$ of the blade arrangement released at maximum braking power is the upper threshold value which the variable flow cross-section $dA_V$ can assume.

**7.** Internal combustion engine-turbo-charger system as claimed in claim 6,
**characterised in that**
the variable flow cross-section $dA_V$ is variable depending on speed.

**8.** Internal combustion engine-turbo-charger system as claimed in claim 7,
**characterised in that**
the variable flow cross-section $dA_V$ becomes smaller with decreasing speed.

**9.** Internal combustion engine-turbo-charger system as claimed in one of claims 6 to 8,

**characterised in that**
the adjustment range of the variable flow cross-section $dA_V$ is assigned to the upper range of a speed band which continues up to the speed corresponding to the maximum braking power.

**10.** Internal combustion engine-turbo-charger system as claimed in claim 9,
**characterised in that**
the maximum braking power occurs at a speed that is above the nominal speed of the internal combustion engine.

**11.** Internal combustion engine-turbo-charger system as claimed in claim 9 or 10,
**characterised in that**
the upper speed range in which the additional variable flow cross-section $dA_V$ is released starts at approximately 2/3 to 3/4 of the given speed at maximum braking power.

**12.** Internal combustion engine-turbo-charger system as claimed in one of the preceding claims,
**characterised in that**
the maximum braking power occurs at a speed which is approximately 1/4 to 1/3 higher than the nominal speed at nominal output of the internal combustion engine.

**Revendications**

**1.** Système turbocompresseur pour moteurs à combustion interne, dans lequel le moteur à combustion interne est pourvu d'au moins une chambre de combustion de volume variable et présente une cylindrée déterminée par la somme des volumes différentiels entre le volume minimum et le volume maximum des chambres de combustion du moteur à combustion interne, et dans lequel le système turbocompresseur associé au moteur à combustion interne comprend au moins une turbine qui est agencée dans le trajet des gaz d'échappement du moteur à combustion interne et qui présente un canal d'écoulement débouchant via une zone en forme de buse annulaire sur un rotor de turbine, un distributeur étant agencé dans la région d'embouchure, qui comprend une grille directrice variable pourvue d'aubes directrices réglables, qui permet des sections d'écoulement libres de tailles différentes et via laquelle on peut déterminer la section d'écoulement respective la plus étroite à titre d'étranglement pendant le fonctionnement en frein moteur dans le trajet des gaz d'échappement vers la turbine, et qui est réglable en fonction des paramètres de fonctionnement du moteur à combustion interne, **caractérisé en ce que**, par rapport au fonctionnement en frein moteur lors de la puissance de freinage maximale du moteur à combustion interne,

- la section d'écoulement $A_T$ libérée donnée dans le trajet des gaz d'échappement vers la turbine lors de la puissance de freinage maximale,
- le diamètre d'entrée $D_T$ du rotor de turbine, et
- la cylindrée $V_H$ du moteur à combustion interne,

satisfont la relation suivante les uns par rapport aux autres :

$$TBF = A_T \times [D_T/V_H]$$

TBF en tant que "facteur turbo-frein" étant inférieur à 0,005 (5 ‰).

2. Système turbocompresseur pour moteurs à combustion interne selon la revendication 1, **caractérisé en ce que** le facteur turbo-frein TBF est compris entre 0,001 et 0,003 (1 à 3 ‰).

3. Système turbocompresseur pour moteurs à combustion interne selon la revendication 2, **caractérisé en ce que** le facteur turbo-frein TBF est de l'ordre de 0,002 (2 ‰).

4. Système turbocompresseur pour moteurs à combustion interne selon l'une des revendications 1 à 3, **caractérisé en ce que** dans une grille directrice à aubes directrices réglables, et pour la section d'écoulement libre $A_T$ donnée lors de la puissance de freinage maximale dans le trajet des gaz d'échappement vers la turbine, la relation suivante est satisfaite :

$$A_T = A_D + dA_{V.max.}$$

dans laquelle :

$A_D$ est la section d'écoulement résiduelle lorsque la grille directrice est fermée, et
$dA_{V.max.}$ est une section d'écoulement libérée en supplément par la grille directrice lors de la puissance de freinage maximale.

5. Système turbocompresseur pour moteurs à combustion interne selon la revendication 4, **caractérisé en ce que** le rapport VF entre la section d'écoulement résiduelle $A_D$ restant lorsque la grille directrice est fermée et la section d'écoulement supplémentaire $dA_{V.max.}$ libérée lors d'une puissance de freinage maximale, satisfait la relation suivante :

$$VF = [dA_{V.max}/A_D] > 0,2.$$

6. Système turbocompresseur pour moteurs à combustion interne selon la revendication 5, **caractérisé en ce que** la section d'écoulement $dA_{V.max.}$, libérée en supplément lors d'une puissance de freinage maximale, de la grille directrice est la valeur limite supérieure que peut prendre la section d'écoulement $dA_V$ à l'intérieur de sa plage de réglage.

7. Système turbocompresseur pour moteurs à combustion interne selon la revendication 6, **caractérisé en ce que** la section d'écoulement variable $dA_V$ peut être modifiée en fonction de la vitesse de rotation.

8. Système turbocompresseur pour moteurs à combustion interne selon la revendication 7, **caractérisé en ce que** la section d'écoulement variable $dA_V$ diminue lorsque la vitesse de rotation diminue.

9. Système turbocompresseur pour moteurs à combustion interne selon l'une des revendications 6 à 8, **caractérisé en ce que** la plage de réglage de la section d'écoulement variable $dA_V$ est associée à la plage supérieure d'une bande de vitesse de rotation qui va jusqu'à la vitesse de rotation correspondante à la puissance de freinage maximale.

10. Système turbocompresseur pour moteurs à combustion interne selon la revendication 9, **caractérisé en ce que** la puissance de freinage maximale est donnée à une vitesse de rotation qui est supérieure à la vitesse de rotation nominale du moteur à combustion interne.

11. Système turbocompresseur pour moteurs à combustion interne selon l'une ou l'autre des revendications 9 et 10, **caractérisé en ce que** la plage de vitesse de rotation supérieure dans laquelle la section d'écoulement variable supplémentaire $dA_V$ est libérée commence approximativement à une valeur entre 2/3 et 3/4 de la vitesse de rotation donnée lors de la puissance de freinage maximale.

12. Système turbocompresseur pour moteurs à combustion interne selon l'une des revendications précédentes, **caractérisé en ce que** la puissance de freinage maximale est donnée à une vitesse de rotation qui est supérieure d'environ 1/4 à 1/3 à la vitesse de rotation nominale donnée lors de la puissance nominale du moteur à combustion interne.

FIG.1

FIG.2

FIG. 3

EP 0 991 856 B1

FIG. 4